(19) Europäisches Patentamt
European Patent Office
Office européen des brevets

(11) **EP 2 604 820 B1**

## (12) EUROPEAN PATENT SPECIFICATION

(45) Date of publication and mention
of the grant of the patent:
**17.06.2015  Bulletin 2015/25**

(21) Application number: **11193244.8**

(22) Date of filing: **13.12.2011**

(51) Int Cl.:
*F02B 21/00* *(2006.01)*       *F02M 23/00* *(2006.01)*
*F02M 25/10* *(2006.01)*       *A62C 27/00* *(2006.01)*

(54) **Air supply system for supplying air to a forest vehicle engine in the case of hypoxia**

Luftlieferungssystem zum Liefern von Luft an ein Waldfahrzeug im Fall von Hypoxie

Système d'alimentation en air pour fournir de l'air à un moteur de véhicule forestier en cas d'hypoxie

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**19.06.2013  Bulletin 2013/25**

(73) Proprietor: **Iveco Magirus AG**
**89079 Ulm (DE)**

(72) Inventor: **Lugrin, Brice**
**730000 Bassens (FR)**

(74) Representative: **Franzolin, Luigi et al**
**Studio Torta S.p.A.**
**Via Viotti, 9**
**10121 Torino (IT)**

(56) References cited:
**US-A- 4 300 496       US-A1- 2006 037 591**
**US-B1- 7 267 114**

**Description**

**Field of the invention**

The present invention relates to a forest fire fighting vehicle comprising air supply system for supplying air to the combustion engine of the vehicle in the case of environmental hypoxia conditions. In particular said air supply system allows the engine restarting in response to the hypoxia conditions so as to move the vehicle a few hundred meters.

The present invention also relates to a dimensioning system for an air supply system for an FFF vehicle by means of a computer.

**Description of the prior art**

Forest fire fighting vehicles (hereinafter indicated as "FFF vehicle") are commonly used to extinguish fire by spraying water. An example of such a vehicle is shown in EP-7267114. In particular these vehicles are used to cross country or to reach mountain or hilly regions in the case of fire. For these reasons the structure, the operation and the performances of FFF vehicles are deeply different from those of other fire fighting vehicles normally used to extinguish fire in different environments, for example in urban regions or inside tunnels. In this regard, the French standard NF S61-518 indicates the technical characteristics necessary to a fire fighting vehicle to be classified as a FFF vehicle.

As it is known, during the usual intervention of a FFF vehicle a known risk of accidents derives from the absence of oxygen in proximity of the vehicle. This condition is known as "hypoxia" and it is normally due to the evaporation of water sprayed to extinguish the fire and to the flammable vapors produced by the vegetation burning.

More in detail, in a burning forested area, the ground and vegetation, heated by the fire, evaporates the water forming a vapor cloud. The latter can be moved by the wind towards the path wherein the FFF vehicle is located. The presence of the vapor cloud around the FFF vehicle can causes the hypoxia conditions and the engine can stall. As a consequence the vehicle can not move and the operators get in danger.

Therefore, in response to the hypoxia conditions, a fire fighting vehicle must be capable to restart its engine in order to move the vehicle itself away for a few hundred meters. Indeed it has been required that an autonomy of about 200-300 meter is sufficient to escape from the hypoxia region.

The fire fighting vehicles used to extinguish fires in tunnel are subjected to the same problem, where the problem is amplified because of closed characteristics of the tunnels. For this reason the fire fighting vehicles for tunnels (hereinafter indicated also as "tunnel FF vehicles") are normally provided with an air supply system which ensures the operations of the diesel engine of the vehicle when it is subjected to conditions of hypoxia.

An air supply system normally used in a tunnel FF vehicle, comprises usually an air reservoir with at least a capacity of 200 -300 liters and dosage means for dosing the air flow into the air intake line of the engine of the vehicle. More in detail, such dosage means comprise an electronic control unit which calculates continuously, by means of an appropriate software, the value of the instant air flow rate supplied to the air intake line of the engine by means of a plurality of air nozzles.

This different type of vehicles is designed to resist to high temperature being heavily armored. However, these heavy vehicle are addressed to cover flat asphalted surfaces.

The air supply implemented on a tunnel FF vehicle can not be implemented on a forest fire fighting vehicle. First of all, because several type of commercial vehicles may be transformed into "FFF vehicle". Therefore, each diesel engine has its own characteristics and then the control unit should be reconfigured for each specific engine. Therefore, such solution is too sophisticated and too expensive for a FFF vehicle that must be compact, light for covering uneven ground, essential and provided with a reliable equipment.

At the opposite, the use of an air supply system provided with electronic dosage system is justified when the vehicle, a heavy vehicle, has a reservoir of at least 200 - 300 liters, i.e., when itself is able to resist at so extreme conditions in terms of temperature and to travel a long distance in such conditions.

Therefore, implementing a computerized air supply system on a FFF vehicle is inappropriate and means wasting money.

On the other hand, it is very hard to imagine a reliable air supply system able to supply air in such conditions, without a computerized unit, to different kind of commercial vehicle transformed into FFF vehicle.

As a matter of fact, at present, there are not solutions implemented on FFF vehicles which allow to overcome the technical problem of hypoxia.

Summary of the invention

Therefore the main aim of the present invention is to provide an air supply system for an FFF vehicle capable, in response to hypoxia conditions, to restart the vehicle engine for moving away about a few hundred meters.

This, independently from the engine characteristics.

The present invention relates to an air supply system for an FFF vehicle according to claim 1.

The air supply system comprises an air reservoir tank and an air expansion supply line connecting the air reservoir tank with a air intake line of the engine. From the reservoir tank to the air intake line a reducing pressure valve and a main valve are located. Such main valve is ON/OFF-type.

The main valve or the branch connecting the main valve with the engine air intake line define an outlet that can be considered as a nozzle.

When the main valve is activated in ON position, the pressurized air flows to the engine intake line through the reducing pressure valve and the main valve.

The air supply system of the present invention find its main application in those vehicles provided with an air reservoir having a capacity less then 100 liters.

Advantageously, the technical solution herewith disclosed for facing the hypoxia conditions is cheaper, more reliable and less complex with respect to the computerized systems implemented in fire fighting vehicle for tunnels.

Within this aim, another object of the present invention is to provide an FFF vehicle capable to move away from an hypoxia environment thanks to the abovementioned air supply system.

Not the last object of the present invention is to provide a dimensioning system for an air supply system for an FFF vehicle by means of a computer.

These and further objects are achieved by means of an apparatus and method as described in the attached claims, which form an integral part of the present description.

Brief description of the drawings

The invention will become fully clear from the following detailed description, given by way of a mere illustrative and non limiting example, to be read with reference to the attached drawing Figures, wherein:

- Figure 1 shows a scheme of a diesel engine motor of a vehicle according to the present invention;
- Figure 2 shows a scheme of a manual operation air supply system of a vehicle according to the present invention;
- Figure 3 and figures 4 show plots of an engine performances in predefined and selected working conditions, according to the present invention.

The same reference numerals and letters in the figures designate the same or functionally equivalent parts.

Detailed description of the preferred embodiments

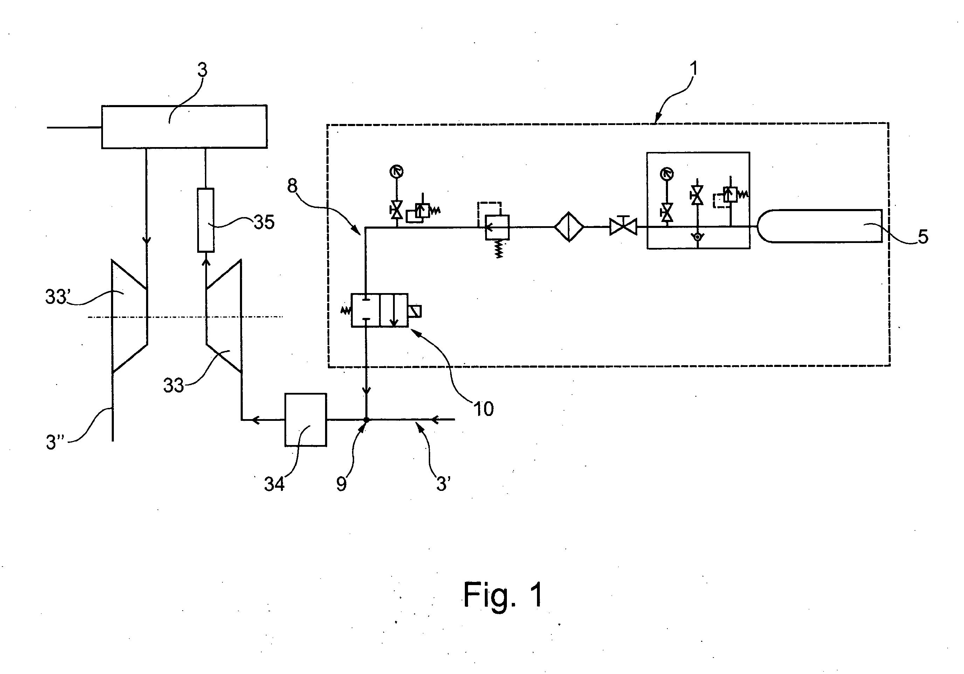

With reference to Figure 1, the present invention is relative to a Forest Fire Fighting vehicle (hereinafter FFF vehicle) comprising a diesel engine 3 provided with an air intake line 3' and a gas exhaust line 3". Generally, along the intake line 3' is located a compressor unit 33 to increase the pressure of the air addressed to the engine 3. Preferably a cooler 35 is arranged between the compressor 33 and the engine 3. An air filter 34 can be arranged upstream the compressor 33 with respect to the direction of the air flow along the intake line 3'. Along the exhaust line 3" a turbine 33' can be arranged in order to operate the compressor 33 according to one o further known arrangements. The FFF vehicle comprises an air supply system 1 object of the present invention.

Such air supply system 1 is able to deliver air to said intake line 3' in case of hypoxia conditions. According to the present invention such air supply system 1 comprises at least an air reservoir tank 5 and a supply line 8 which develops from the said air reservoir 5 up to a connection 9 with said air intake line 3'.

As shown in Figure 1, the connection 9 may be upstream of the compressor unit 33, if present, with respect to air cross direction of the intake line 3'. In this way the air flow coming from the intake line can be compressed by the compressor unit 33 so as to achieve the appropriate conditions required by the diesel engine 3.

The air supply system according to the present invention comprises an ON/OFF valve 10 located along said supply line 8 upstream of said connection 9. In particular the valve 10 may manually commutable from a closure configuration to a open configuration at the reaching of which a constant flow rate of air coming from the reservoir tank 5 enters into the intake line 3' of the engine 3. Therefore, according to a preferred embodiment of the present invention, the control of the air supply system 1 is performed manually by an operator without an automatic control or the use of electronic air dosage means. More in detail the operator acts on the valve 10 after the recognition of the hypoxia conditions. In this regard, in a preferred embodiment, the FFF vehicle comprises detecting means such as, for example, an oxygen sensor which detects the concentration of oxygen in the air around the vehicle. The detecting means are operatively connected to a visual or a sonorous alarm located inside the cabin. When the rate of oxygen is below a value characteristic of hypoxia condition (typically below 4%), the visual/sonorous alarm signals to the operator the need to activate the valve 10 of the air supply system 1.

According to another preferred embodiment of the present invention, said ON/OFF valve is automatically operated or enabled by said oxygen sensor. Advantageously, when the IN/OFF valve 10 is automatically enabled, it can be commutated in ON position only when the oxygen sensor detects a low concentration of oxygen in the air around the vehicle, in order to avoid an erroneous activation of the air supply system.

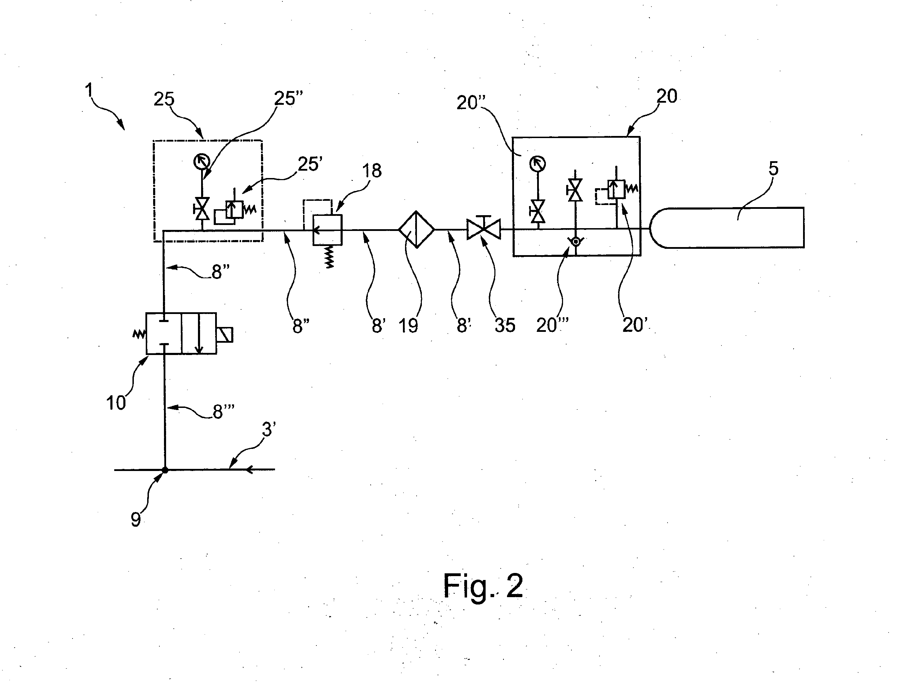

Figure 2 shows in more detail a possible embodiment of the air supply system 1 of a FFF vehicle according to the present invention. In particular Figure 2 shows the supply line 8 which develops from the air reservoir tank 5 towards the air intake line 3' of the engine. According to a preferred embodiment, such air reservoir tank 5 has a capacity below 100 liters, preferably in a range from 50 to 80 liters with an internal pressure in a range between 200 to 300 Bar. In particular according to a preferred embodiment such reservoir tank 5 has a capacity of 50 liters with an internal pressure of 300 Bar. The reservoir air tank 5, can be easily mounted on the FFF vehicle (for example on the back of the cabin) by virtue of its contained capacity which involve contained dimensions. In this regard, the limited bulky of the air reservoir tank does not require any particular and/or complicated re-design of the vehicle.

The air supply system 1 comprises reducing pressure means 18 to reduce the pressure of the air flow from a first value, characteristic of the said air reservoir tank 5, to a second value characteristic of said air intake line 3' of the diesel engine 3. Such reducing means are operatively interposed between a high pressure branch 8' and a low pressure branch 8" of the air supply line 8 of the system 1. The pressure of the air flow crossing the high pressure branch 8' corresponds substantially to the internal pressure of the air tank reservoir 5 (e.g. 300 Bar). Instead, the pressure value of the air flow crossing the low pressure branch 8" corresponds to the pressure value imposed by the reducing valve 18.

A portion of said low pressure branch 8" is indicated with the sign 8"' and is comprised between the main ON/OFF valve 10 and the connection 9 of the supply line 8 and the intake line 3'.

In the just described context the dimensioning of the components is essential.

The main components are the reservoir tank 5, air pressure into the low pressure branch 8" and the section of the connection 9 or, equivalently, of the nozzle used to supply air intake line 3'.

First of all, several commercial vehicles (and relative engines) are considered: RENAULT MIDLUM™, DAIMLER-BENZ UNIMOG™ and IVECO TECTOR™ 250 and 280.

The displacement of such engines is comprised between 4,8 to 7,2 liters.

According to the present invention the following working conditions are selected and considered:

- 50% of the available power at about 1400 rpm
- slope percentage of 20% with the first gear engaged, 15% with the second gear engaged, 6% with the third gear engaged.

The power percentage is chosen in order to make the weight differences between the vehicles not relevant.

After, according to computer simulations the pressure admission and the lambda parameters on the ratios torque/max torque are calculated and plotted according to said load conditions.

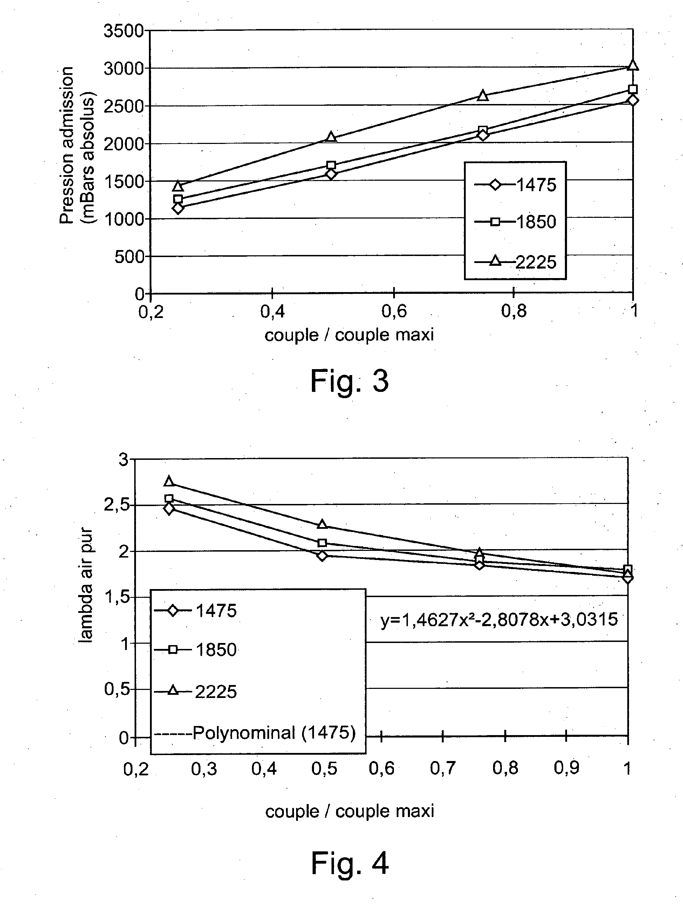

Examples of plots are given on figures 3 and 4, where, respectively,

- the admission pressure (bar) on the ratio instantaneous torque/max torque and
- lambda on the ratio instantaneous torque/max torque are plot in said predefined and selected working conditions. Starting form the supercharging pressure (downstream the compressors), the oxygen content achieved by lambda plot and the engine displacement, the dimension of the air reservoir tank are respectively found according to the three positive slope conditions at 1400 rpm of engine revolutions:

Table 1

| Tank capacity (liters with 200 bars) | MIDLUM | UNIMOG* | TECTOR 250 | TECTOR 280 |
|---|---|---|---|---|
| First gear/slope 20% | 51.9 | 43.2 | 63.5 | 51.3 |
| Second gear/slope 15% | 57.7 | 35.2 | 67.3 | 55.8 |
| Third gear/slope 6% | 63 | 32.7 | 82.4 | 73.3 |
| * Only for the UNIMOG™ the comparison is conducted respectively with the second, third and fourth gear engaged, being the first gear as a reduced first gear. | | | | |

The capacity of the reservoir tank 5 derived from said table 1 is about 30 - 90 liters, namely less the 100 liters. Said capacities are calculated by considering as target 200-300 meters of covering distance with said gear (1st, 2nd, 3rd) gear engaged. The next task is making the same air supply system capable of delivering air to the listed vehicle/engines in order to cover a distance about of 200-300m, without changing the main components of the system, namely the reducing valve 18 and the nozzle section 10 and/or 9.

The following formula for calculating the air flow mass Qm is known:

$$Q_m = C \bullet A \bullet [\gamma \bullet \rho \bullet P \bullet (2/(\gamma+1)^{(\gamma+1)/(\gamma-)1})]^{1/2} \quad \text{(eq)}$$

Where

C = discharge coefficient of the nozzle
A = section of the nozzle collar
$\gamma=Cp/Cv=1,4$ for the air
P = absolute pressure upstream with respect to the nozzle collar
$\rho$ = air density

According to table 1 several capacity values may be introduced into said formula (eq), hence, P and A are unknown parameters. Therefore, the solution in not determined. According to the present invention a diameter of 7 mm is predefined for said (circular) section A of the nozzle. After, according to the said formula (eq) the mass flows are obtained by varying the absolute pressures upstream the nozzle:

Table 2

| P (bars absolute) | 3 | 4 | 5 | 6 | 7 | 8 | 9 | 10 | 11 |
|---|---|---|---|---|---|---|---|---|---|
| Qm (g/s) | 24.7 | 32.9 | 41.1 | 49.3 | 57.6 | 65.8 | 74.0 | 82.2 | 90.4 |

According to table 2 it is clear that all the capacity values disclosed on table 1 can be reached with the nozzle selected by regulating the reducing valve 18.

This means that, even if the vehicle/engines considered have very different characteristics/performances, the air supply system according to present invention is able to work properly on said vehicles.

Being the reducing valve 18 adjustable, the pressure in the low pressure branch 8" can be selected in order to obtain the required air flow mass Qm.

According to validation calculations, the oxygen content estimated is about 21%. This means that any engine can work properly without stability problems.

Therefore the dimensioning method according to the present invention is implemented by a computer in order to calculate the lambda and the pressure admission at a predefined engine speed condition for several load conditions in order to calculate the capacity of the air reservoir tank 5. Then, the section of the nozzle is imposed and the according to the formula (eq) the low pressure in the low pressure branch (8") is calculated in order to satisfy the air flow mass obtained by the computer simulations.

This invention can be implemented advantageously in a computer program comprising program code means for performing one or more steps of such method, when such program is run on a computer. For this reason the patent shall also cover such computer program and the computer-readable medium that comprises a recorded message, such computer-readable medium comprising the program code means for performing one or more steps of such method, when such program is run on a computer. According to a further aspect of the present invention, the air supply system 1 also comprises high pressure safety means 20 located along said high pressure branch 8' between the pressure reducing means 18 and the air reservoir tank 5. The high pressure safety means 20 comprise at least one safety valve 20' for discharging the air flow coming from the air reservoir tank 5 when its internal pressure overcomes a preestablished value. The intervention of the safety valve 20' could happen, for example, in response to an overheating of the air reservoir tank 5 which generates an increasing of the reservoir tank internal pressure. The intervention of the safety valve 20' avoids advantageously the risk of explosion of the air reservoir tank 5 preserving at the same time the other parts/components of the air supply system 1. According to the invention the high pressure safety means 20 preferably comprises a first manometer 20" which provides to the operator the measure of the air pressure along the high pressure branch 8'. The high pressure control means also comprise a re-filling connection element 20''' for the refilling of the air reservoir tank 5 after the emptying of the same. Such re-filling element 20''' is located downstream the safety valve 20' and comprises a unidirectional valve which allows only the passage of the air into the high pressure branch 8" in order to refill the air reservoir tank 5. In this regard the manometer 20" allows to check the refilling operation by providing the instant internal pressure measure.

With reference again to Figure 2, the air supply system 1 comprises an air filter 19 located along the high pressure branch 8' between the pressure reducing means and the high pressure control means 20. The function of such air filter 19 is to clean the air coming from the air reservoir before it reaches the reducing means 18 and the main valve 10. The presence of the air filter 19 allows to preserve the integrity of the parts (pressure reducing means 18, main valve 10) of the system 1 downstream the air filter 19 as well as the integrity of the air intake line 3' of the engine.

As shown in Figure 2, before the air filter 19 and the pressure reducing means 18 a shut-off valve 35 is preferably provided for insulating the low pressure branch 8" from the high pressure branch 8'. This insulation can be useful, for example, during the refilling of the reservoir air tank 5 or in general during the maintenance operations of one of said branches 8', 8".

The air supply system 1 also comprises low pressure control means 25 arranged along the low pressure branch 8" between the main valve 10 and the pressure reducing means 18. The low pressure control means comprise a second safety valve 25' to discharge the air flow if its pressure overcomes a preestablished value. In particular such second safety valve 25' is used to prevent an overpressure along the low pressure branch 8" in the case of failure of the reducing means 18. In other words the second safety valve 25' avoids that the air flow pressure exceed the pressure value provided for the low pressure branch 8" and the air intake line 3' of the engine.

As above indicated, the main valve 10 may manually operable so as to allow the passage of the air flow, coming to the air reservoir tank 5, into the intake line 3'.

Further implementation details will not be described, as the man skilled in the art is able to carry out the invention starting from the teaching of the above description.

## Claims

1.  Air supply system (1) for delivering air, in case of hypoxia conditions, to an FFF vehicle comprising a diesel engine (3) provided with an air intake line (3'), the air supply system (1) comprising:

    - at least an air reservoir tank (5);
    - a supply line (8) connecting said air reservoir tank (5) with said air intake line (3');
    - a main ON/OFF valve (10) on said supply line (8);

    **characterized in that** it comprises

    - an adjustable pressure reducing valve (18) on said supply line (8), between the air reservoir tank (5) and the air intake line (3'), the adjustable reducing valve (18) defining a high pressure branch (8') and a low pressure branch (8");
    said main ON/OFF valve (10) being placed between said adjustable reducing valve (18) and the air intake line (3').

2.  Air supply system according to claim 1, wherein the main ON/OFF valve (10) and/or a branch (8') connecting the main ON/OFF valve (10) with the engine air intake line (3') define an outlet.

3.  Air supply system according to claim 2, wherein said adjusting reducing valve (10) is adjustable so as the absolute pressure in said low pressure branch (8") is comprised in the range between 3 and 11 bars.

4.  Air supply system according to claim 3, wherein said outlet has a section (A) and wherein said absolute pressure is chosen so as a flow air mass (Qm) supplied by the air supply system is comprised in a range between 24.7 to 90.4 g/s.

5.  Air supply system according to claim 4, wherein said section (A) is circular having a diameter of about 7 mm.

6.  Air supply system according to claim 4, wherein said flow air mass is determined as a function of

    - lambda engine parameter
    - engine displacement
    - engine pressure admission
    - a covering distance of 200-300 meters

    and wherein the lambda parameter and the engine pressure admission are calculated by computer simulations at 50% of the total available power at about 1400 engine revolutions for several load conditions.

7.  Air supply system according to claim 6, wherein said load conditions comprise different positive slopes with respective different engaged gears.

8. A forest fire fighting vehicle equipped with a diesel engine (3) provided with an air intake line (3') and with an air supply system (1) according to any of the preceding claims.

9. FFF vehicle according to claim 8, wherein the reservoir tank (5) of said air supply system (1) has a capacity less than 100 liters.

10. A dimensioning process for an air supply system according to any one of the previous claims, the dimensioning process being performed by means of a computer and comprising the following steps:

- calculation of engine lambda and engine pressure admission at a predefined engine speed condition for several load conditions in order to obtain respective capacities of the air reservoir tank (5) for said load conditions and for a covering distance of about 200-300 meters;
- definition of a section of an outlet of the air supply system and
- according to the following formula (eq)

$$Q_m = C \bullet A \bullet [\gamma \bullet \rho \bullet P \bullet (2/(\gamma+1)^{(\gamma+1)/(\gamma-)1})]^{1/2}$$

(eq)

where

C = discharge coefficient of the nozzle (= air supply system outlet)
A = section of the nozzle collar
$\gamma = Cp/Cv = 1,4$ for the air
P = absolute pressure upstream with respect to the nozzle collar
$\rho$ = air density,

calculation of the low pressure P in the low pressure branch (8 ") in order to satisfy said calculated capacities.

11. Computer program comprising computer program code means adapted to perform all the steps of claim 10 when said program is run on a computer.

12. A computer readable medium having a program recorded there on, said computer readable medium comprising computer program code means adapted to perform all the steps of claim 10 when said program is run on a computer.

**Patentansprüche**

1. Luftzufuhrsystem (1) zur Zuführung von Luft unter Bedingungen von Hypoxie zu einem Waldbrandbekämfungsfahrzeug mit einem Dieselmotor (3), der mit einer Lufteinlassleitung (3') ausgestattet ist, welches Luftzufuhrsystem (1) umfasst:

- zumindest einen Luftvorratstank (5);
- eine Zufuhrleitung (8), die den Luftvorratstank (5) mit der Lufteinlassleitung (3') verbindet;
- ein Haupt-AN/AUS-Ventil (10) in der Zufuhrleitung (8);

**dadurch gekennzeichnet, dass** das Luftzufuhrsystem ferner umfasst:

- ein einstellbares Druckminderungsventil (18) in der Zufuhrleitung (8) zwischen dem Luftvorratstanks (8) und der Lufteinlassleitung (3'), welches einstellbare Minderungsventil (18) einen Hochdruckzweig (8') und einen Niederdruckzweig (8") begrenzt;

wobei das Haupt-AN/AUS-Ventil (10) zwischen dem einstellbaren Minderungsventil (18) und der Lufteinlassleitung (3') angeordnet ist.

2. Luftzufuhrsystem gemäß Anspruch 1, bei welchem das Haupt-AN/AUS-Ventil (10) und/oder ein Zweig (8') zur Verbindung des Haupt-AN/AUS-Ventils (10) mit der Motor-Lufteinlassleitung (3') einen Auslass begrenzen.

3. Luftzufuhrsystem gemäß Anspruch 2, bei welchem das einstellbare Minderungsventil (10) derart einstellbar ist, dass der Absolutdruck in dem Niederdruckzweig (8") in dem Bereich zwischen 3 und 11 bar liegt.

4. Luftzufuhrsystem gemäß Anspruch 3, bei welchem der Auslass einen Querschnitt (A) aufweist und der absolute Druck so gewählt wird, dass ein Luftmassenstrom (Qm), der durch das Luftzufuhrsystem zugeführt wird, in einen Bereich zwischen 24,7 bis 90,4 g/s liegt.

5. Luftzufuhrsystem gemäß Anspruch 4, bei welchem der Querschnitt (A) kreisförmig mit einem Durchmesser von etwa 7 mm ist.

6. Luftzufuhrsystem gemäß Anspruch 4, bei welchem der Luftmassenstrom bestimmt wird als eine Funktion

- des lambda-Motorparameters,
- des Hubraums des Motors,
- der Druckbeaufschlagung des Motors,
- einer Reichweite von 200 - 300 m,

und wobei der lambda-Parameter und die Druckbeaufschlagung des Motors durch Computersimulationen bei 50% der gesamten verfügbaren Leistung bei etwa 1.400 Motorumdrehungen für unterschiedliche Lastbedingungen berechnet sind.

7. Luftzufuhrsystem gemäß Anspruch 6, bei welchem die Lastbedingungen unterschiedliche positive Steigungen mit unterschiedlichen eingelegten Gängen umfassen

8. Waldbrand-Bekämpfungsfahrzeug, ausgestattet mit einem Dieselmotor (3), der mit einer Luftzufuhrleitung (3') und mit einem Luftzufuhrsystem (1) gemäß einem der vorhergehenden Ansprüche ausgestattet ist.

9. Waldbrand-Bekämpfungsfahrzeug gemäß Anspruch 8, bei welchem der Vorratstank (5) des Luftzufuhrsystems (1) eine Kapazität von weniger als 100 l aufweist.

10. Dimensionierungsvorgang für ein Luftzufuhrsystem gemäß einem der vorhergehenden Ansprüche, welcher Dimensionierungsvorgang durch einen Computer durchgeführt wird und die folgenden Schritte umfasst:

- Berechnung des lambda-Wertes des Motors und der Druckbeaufschlagung des Motors bei einer vordefinierten Motorgeschwindigkeitsbedingung für verschiedene Lastbedingungen, zum Erhalt jeweiliger Kapazitäten des Luftvorratstanks (5) für diese Lastbedingungen und für eine Reichweite von etwa 200 - 300 m;
- Definition eines Abschnitts eines Auslasses des Luftzufuhrsystems, und
- Berechnung nach der folgenden Formel (eq)

$$Q_m = C \bullet A \bullet [\gamma \bullet \rho \bullet P \bullet (2/(\gamma+1)^{(\gamma+1)/(\gamma-1)})]^{1/2}$$

(eq)

mit

C = Durchflusskoeffizient der Düse (= Auslass des Zufuhrsystems)
A = Querschnitt des Düsenkragens
$\gamma$ = Cp/Cv = 1,4 für Luft
P = Absolutdruck stromaufwärts des Düsenkragens
$\rho$ = Luftdichte,

des Niederdrucks P in dem Niederdruckzweig (8") zur Erfüllung der berechneten Kapazitäten.

**11.** Computerprogramm, umfassend Computerprogrammcode-Mittel zur Durchführung aller Schritte des Anspruchs 10, wenn das Programm auf einem Computer ausgeführt wird.

**12.** Computerlesbares Medium, umfassend ein darauf gespeichertes Programm, welches computerlesbare Medium Computerprogrammcode-Mittel umfasst, die dazu vorgesehen sind, alles Schritte aus Anspruch 10 durchzuführen, wenn das Programm auf einem Computer ausgeführt wird.

**Revendications**

**1.** Système d'alimentation d'air (1) pour délivrer de l'air, en cas de conditions d'hypoxie, à un véhicule de lutte contre les feux de forêt, FFF, comprenant un moteur diesel (3) pourvu d'une conduite d'aspiration d'air (3'), le système d'alimentation d'air (1) comprenant :

   - au moins un réservoir d'air (5) ;
   - une conduite d'alimentation (8) reliant ledit réservoir d'air (5) à ladite conduite d'aspiration d'air (3') ;
   - une vanne d'ouverture/fermeture principale (10) sur ladite conduite d'alimentation (8) ;

   **caractérisé en ce qu'**il comprend :

   - une vanne de réduction de pression ajustable (18) sur ladite conduite d'alimentation (8), entre le réservoir d'air (5) et la conduite d'aspiration d'air (3'), la vanne de réduction ajustable (18) définissant une branche de haute pression (8') et une branche de basse pression (8") ;

   ladite vanne d'ouverture/fermeture principale (10) étant placée entre ladite vanne de réduction ajustable (18) et la conduite d'aspiration d'air (3').

**2.** Système d'alimentation d'air selon la revendication 1, dans lequel la vanne d'ouverture/fermeture principale (10) et/ou une branche (8') reliant la vanne d'ouverture/fermeture principale (10) à la conduite d'aspiration d'air de moteur (3') définissent une sortie.

**3.** Système d'alimentation d'air selon la revendication 2, dans lequel ladite vanne de réduction d'ajustement (10) est ajustable de sorte que la pression absolue dans ladite branche de basse pression (8'') soit comprise dans la plage entre 3 et 11 bars.

**4.** Système d'alimentation d'air selon la revendication 3, dans lequel ladite sortie a une section (A) et dans lequel ladite pression absolue est choisie de sorte qu'un débit massique d'air (Qm) fourni par le système d'alimentation d'air soit compris dans une plage entre 24,7 et 90,4 g/s.

**5.** Système d'alimentation d'air selon la revendication 4, dans lequel ladite section (A) est circulaire avec un diamètre d'environ 7 mm.

**6.** Système d'alimentation d'air selon la revendication 4, dans lequel ledit débit massique d'air est déterminé en fonction de :

   - un paramètre de moteur lambda ;
   - une cylindrée de moteur ;
   - une admission de pression de moteur ;
   - une distance de couverture de 200 à 300 mètres,

   et dans lequel le paramètre lambda et l'admission de pression de moteur sont calculés par des simulations informatiques à 50 % de la puissance disponible totale à environ 1400 tours de moteur pour plusieurs conditions de charge.

**7.** Système d'alimentation d'air selon la revendication 6, dans lequel lesdites conditions de charge comprennent différentes pentes positives avec différents engrenages respectifs engagés.

**8.** Véhicule de lutte contre les feux de forêt équipé d'un moteur diesel (3) pourvu d'une conduite d'aspiration d'air (3') et d'un système d'alimentation d'air (1) selon l'une quelconque des revendications précédentes.

9. Véhicule FFF selon la revendication 8, dans lequel le réservoir (5) dudit système d'alimentation d'air (1) a une contenance inférieure à 100 litres.

10. Procédé de dimensionnement pour un système d'alimentation d'air selon l'une quelconque des revendications précédentes, le procédé de dimensionnement étant effectué au moyen d'un ordinateur et comprenant les étapes suivantes :

- le calcul du lambda de moteur et de l'admission de pression de moteur à une condition de régime moteur prédéfinie pour plusieurs conditions de charge afin d'obtenir des contenances respectives du réservoir d'air (5) pour lesdites conditions de charge et pour une distance de couverture d'environ 200 à 300 mètres ;
- la définition d'une section d'une sortie du système d'alimentation d'air ; et
- selon la formule suivante (éq)

$$Q_m = C \cdot A \cdot [\gamma \cdot \rho \cdot P \cdot (2/(\gamma+1)^{(\gamma+1)/(\gamma-1)}]^{1/2}$$

(éq)

où

C = coefficient de décharge de la buse (= sortie de système d'alimentation d'air)
A = section du collier de buse
$\gamma$ = Cp/Cv = 1,4 pour l'air
P = pression absolue en amont du collier de buse
$\rho$ = densité d'air,

le calcul de la basse pression P dans la branche de basse pression (8'') afin de satisfaire lesdites contenances calculées.

11. Programme d'ordinateur comprenant des moyens de code de programme informatique aptes à effectuer toutes les étapes de la revendication 10 lorsque ledit programme est exécuté sur un ordinateur.

12. Support lisible par ordinateur sur lequel est enregistré un programme, ledit support lisible par ordinateur comprenant des moyens de code de programme informatique aptes à effectuer toutes les étapes de la revendication 10 lorsque ledit programme est exécuté sur un ordinateur.

Fig. 1

EP 2 604 820 B1

Fig. 2

Fig. 3

y=1,4627x²-2,8078x+3,0315

Fig. 4

**EP 2 604 820 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 7267114 A